# EUROPÄISCHE PATENTSCHRIFT

(11) **EP 1 747 944 B1**
(45) Veröffentlichungstag und Bekanntmachung des Hinweises auf die Patenterteilung: **03.03.2010**
(21) Anmeldenummer: 06015418.4
(22) Anmeldetag: 25.07.2006
(51) Int. Cl.: B60R 21/013, B60R 22/00, B60R 22/46

(54) **Sicherheitsanordnung mit einem Gurtstraffer, Kraftfahrzeug mit einer solchen Sicherheitsanordnung, und Verfahren zur Steuerung eines Gurtstraffers**
Security arrangement with a belt pretensioner, vehicle with such arrangement, and method for controlling a belt pretensioner
Arrangement de sécurité avec un prétensionneur, véhicule avec un tel arrangement, et procédé pour contrôler un prétensionneur de ceinture

(30) Priorität: 30.07.2005 DE 102005035849
(43) Veröffentlichungstag der Anmeldung: 31.01.2007
(73) Patentinhaber: GM Global Technology Operations, Inc., Detroit, MI 48265-3000 (US)
(72) Erfinder: Bauer, Klaus, 55545 Bad Kreuznach (DE); Hesse, Simon, 67593 Westhofen (DE); Kettern-Kohler, Horst, 74722 Buchen (DE); Maier, Jürgen, 67808 Weitersweiler (DE); Rick, Ulrich, 55595 Roxheim (DE)
(74) Vertreter: Strauss, Peter

(56) Entgegenhaltungen:
- DE-A1- 10 333 990
- DE-A1- 19 636 448
- US-A1- 2003 114 973
- US-A1- 2004 108 697

## Beschreibung

Die vorliegende Erfindung betrifft eine Sicherheitsanordnung für ein Kraftfahrzeug mit einem Sicherheitsgurt und einem reversiblen Gurtstraffer, wobei der Sicherheitsgurt mit Hilfe des reversiblen Gurtstraffers von einer Normalstellung in eine zweite Stellung gebracht werden kann, in der der Sicherheitsgurt stärker als in der Normalstellung gestrafft ist. Weiterhin bezieht sich die Erfindung auf ein Kraftfahrzeug mit einer solchen Sicherheitsanordnung. Die vorliegende Erfindung betrifft ferner ein Verfahren zur Steuerung eines reversiblen Gurtstraffers in einem Kraftfahrzeug.

Aus dem Stand der Technik sind unterschiedliche Sicherheitsanordnungen für Kraftfahrzeuge bekannt. Diese umfassen regelmäßig einen Aufwickelmechanismus zum automatischen Aufwickeln eines Sicherheitsgurtes um eine Gurtspule. Durch das automatische Aufwickeln wird erreicht, dass der angelegte Sicherheitsgurt locker und komfortabel in einer Normalstellung an dem Körper des Fahrzeuginsassen anliegt und bei Nichtgebrauch des Sicherheitsgurtes um die Gurtspule aufgerollt ist. Das Abwickeln des Sicherheitsgurtes ist bei angelegtem Sicherheitsgurt leicht möglich, so dass die Bewegungsfreiheit des Fahrzeuginsassen gewährleistet ist.

Ferner sind bei den bekannten Sicherheitsanordnungen so genannte Gurtstraffer vorgesehen. Die Gurtstraffer bewirken eine Straffung des Sicherheitsgurtes in eine zweite Stellung, um den Fahrzeuginsassen in Richtung der Rückenlehne des Fahrzeugsitzes zu ziehen und die Gurtlose zu entfernen, so dass die Verletzungsgefahr im Falle eines Zusammenpralls des Fahrzeuges mit einem anderen Fahrzeug oder einem Verkehrshindernis verringert ist. Die bekannten Gurtstraffer können dabei in irreversible und reversible Gurtstraffer unterteilt werden. Der irreversible Gurtstraffer wird erst dann aktiviert, wenn es bereits zu einem Unfall, wie beispielsweise einem Zusammenprall mit einem anderen Fahrzeug gekommen ist. Crashsensoren ermitteln den Zusammenprall und entsenden ein entsprechendes Aktivierungssignal an den irreversiblen Gurtstraffer. Die irreversiblen Gurtstraffer können stets nur einmal aktiviert bzw. ausgelöst werden. Die reversiblen Gurtstraffer sollen hingegen mehrmals, auch schnell hintereinander, auf Grund von Signalen ausgelöst werden können, die die Möglichkeit eines bevorstehenden Crashs andeuten. Das heißt, die reversiblen Gurtstraffer sollen immer dann aktiviert bzw. ausgelöst werden können, wenn ein Crash möglich oder wahrscheinlich ist, aber noch nicht stattgefunden hat bzw. festgestellt wurde.

Eine Gefahrensituation wird bei den reversiblen Gurtstraffern nicht durch Crashsensoren, die lediglich den tatsächlich stattgefundenen Crash ermitteln, sondern durch Fahrdynamiksensoren oder Umfeldsensoren ermittelt, die Informationen über den derzeitigen Bewegungszustand bzw. das Umfeld des Kraftfahrzeuges liefern. Hierzu gehört beispielsweise die Ermittlung der Längs-, Quer- und Vertikalbeschleunigung des Kraftfahrzeuges. Sollten diese gemessenen Werte einen Grenzwert überschreiten, so erfolgt die prophylaktische Aktivierung des reversiblen Gurtstraffers . Sollte der Grenzwert wieder unterschritten werden und tatsächlich kein Crash stattgefunden haben, so wird der reversible Gurtstraffer wieder deaktiviert, so dass der Sicherheitsgurt wieder in seine Normalstellung gebracht werden kann, in der dem Fahrzeuginsassen eine größere Bewegungsfreiheit eingeräumt ist. Bei der nächsten kritischen Fahrsituation bzw. Gefahrensituation ist es möglich, den reversiblen Gurtstraffer erneut zu aktivieren.

Die DE 199 61 799 B4 beschreibt ein Sicherheitsgurtsystem mit einem reversiblen Gurtstraffer. Der bekannte reversible Gurtstraffer verfügt über einen elektromotorischen Antrieb, der in Abhängigkeit von einer aus Sensorsignalen abgeleiteten Wahrscheinlichkeit einer Unfallsituation den Sicherheitsgurt in eine Sicherheitszwischenstellung mit einer bestimmten Zugkraft reversibel vorspannt. Die von der nicht näher erläuterten Precrash-Sensorik erfasste kritische Fahrsituation, die zu einer Aktivierung des Gurtstraffers führt, kann beispielsweise ein Schleudern, eine Vollbremsung usw. sein.

Die DE 103 45 726 A1 beschreibt ein Rückhaltesystem zum Zurückhalten eines Insassen in einem Fahrzeug. Das bekannte Rückhaltesystem verfügt über einen reversiblen Gurtstraffer, der über ein Steuergerät gesteuert wird. Das Steuergerät steht mit einer Fahrzeugsituations-Erfassungseinrichtung zum dynamischen Erfassen von Fahrzeugsituationsdaten, wie beispielsweise der Querbeschleunigung des Fahrzeuges, und einer Insassen-Parameter-Erfassungseinrichtung zum dynamischen Erfassen von Insassen-Parameter-Daten, wie beispielsweise dem Gewicht des Insassen, in Verbindung. Der Gurtstraffer wird in Abhängigkeit von den ermittelten Fahrzeugsituationsdaten, an Hand derer festgestellt wird, ob eine Gefahrensituation vorliegt, und den ermittelten Insassen-Parameter-Daten gesteuert.

Die DE 102 30 483 A1 beschreibt ein Verfahren zur Ansteuerung eines zweistufigen irreversiblen Gurtstraffers. Bei dem bekannten Verfahren wird die Längsbeschleunigung des Kraftfahrzeuges erfasst und einer Integration unterzogen, wobei das Integral der Beschleunigung mit einer Auslöseschwelle verglichen wird. Ist diese Auslöseschwelle überschritten, wird eine Gefahrensituation festgestellt und der irreversible Gurtstraffer ausgelöst.

Die DE 103 32 024 A1 beschreibt ein Verfahren zur Ansteuerung eines reversiblen Gurtstraffers zum Lösen einer von einem Beschleunigungssensor aktivierbaren Gurtauszugssperre eines Rückhaltegurts in einem Kraftfahrzeug. Als Lösezeitpunkt für die Gurtauszugssperre ist ein Zeitpunkt festgelegt, zu dem die erfasste Beschleunigung einen Beschleunigungsschwellwert unterschreitet. Der reversible Gurtstraffer selbst wird wiederum auf Grund einer ermittelten Gefahrensituation aktiviert, d.h. bei Feststellung einer Gefahrensituation wird der Gurtstraffer ausgelöst.

Eine weitere Sicherheitsanordnung ist auch gemäß dem Oberbegriff des Anspruchs 1 aus der DE 19636448 A1 bekannt, die eine Sicherheitsanordnung für ein Kraftfahrzeug beschreibt, die einen Sicherheitsgurt aufweist, der über eine Sicherheitsgurt-Aufrolleinrichtung aufgerollt und vorgespannt werden kann. Die bekannte Sicherheitsanordnung umfasst ferner eine mit der Aufrolleinrichtung zusammenwirkende Spanneinrichtung, mittels dessen die Spannung des Sicherheitsgurtes eingestellt werden kann. Dank der Spanneinrichtung kann der Sicherheitsgurt in unterschiedlichen Modi betrieben werden, wobei der jeweilige Modus davon abhängt, in welcher Fahrsituation sich das Kraftfahrzeug befindet. Wird beispielsweise von einem Objektdetektor detektiert, dass eine Kollision mit einem Objekt möglich ist, so wird der Sicherheitsgurt - sofern weitere Funktionsvoraussetzungen erfüllt sind - im Warn-Modus betrieben. Im Warn-Modus wird der Sicherheitsgurt (3) bis zu einer ersten vorgewählten Gurtspannung gespannt. Sollte der Objektdetektor feststellen, dass eine Kollision mit dem Objekt unvermeidbar ist, so wird der Sicherheitsgurt im Notfall-Modus betrieben, in dem der Sicherheitsgurt bis zu einer zweiten vorgewählten Gurtspannung gespannt wird, die größer als die erste vorgewählte Gurtspannung ist. Insoweit kann der Sicherheitsgurt (3) also von einer Normalstellung in eine zweite Stellung gespannt werden, wobei der Sicherheitsgurt in der zweiten Stellung stärker gespannt ist als in der Normalstellung.

Weitere Sicherheitsanordnungen der zuvor beschriebenen Art sind ferner aus der US 2004/108697 A1 und der US 2003/114973 A1 bekannt.

Die bekannten Sicherheitsanordnungen haben sich in der Praxis bewährt, sind jedoch insofern von Nachteil, als dass sie keinen über den normalen Sicherheitsaspekt hinausgehenden Beitrag leisten können. So können die bekannten Sicherheitsanordnungen insbesondere keinen Beitrag zur Erhöhung des Fahrkomforts leisten.

Es ist daher eine Aufgabe der vorliegenden Erfindung, eine Sicherheitsanordnung mit einem Sicherheitsgurt und einem reversiblen Gurtstraffer zu schaffen, die geeignet ist, den Fahrkomfort zu erhöhen. Ferner liegt der Erfindung die Aufgabe zu Grunde, ein Kraftfahrzeug mit einer solchen Sicherheitsanordnung zu schaffen. Der Erfindung liegt weiterhin die Aufgabe zu Grunde, ein Verfahren zur Steuerung eines reversiblen Gurtstraffers anzugeben, das zur Erhöhung des Fahrkomforts beiträgt.

Diese Aufgabe wird durch die in den Patentansprüchen 1, 12 bzw. 13 angegebenen Merkmale gelöst. Vorteilhafte Ausführungsformen der Erfindung sind Gegenstand der Unteransprüche.

Die erfindungsgemäße Sicherheitsanordnung ist für ein Kraftfahrzeug konzipiert und weist einen Sicherheitsgurt und einen reversiblen Gurtstraffer auf. Der Sicherheitsgurt kann mit Hilfe des reversiblen Gurtstraffers von einer Normalstellung in eine zweite Stellung gebracht werden, in der der Sicherheitsgurt stärker als in der Normalstellung gestrafft ist. Erfindungsgemäß kann der Gurtstraffer unabhängig von einer Gefahrensituation aktiviert werden. Dies kann beispielsweise dadurch erfolgen, dass ein entsprechender Knopf vorgesehen ist, der von dem Fahrer gedrückt werden kann, so dass der Sicherheitsgurt von dem Gurtstraffer in die zweite, gestraffte Stellung gebracht wird.

Erfindungsgemäß kann der Gurtstraffer manuell aktiviert werden. Zu diesem Zweck kann beispielsweise ein entsprechender Knopf, Schalter o. ä. vorgesehen sein, der von dem Fahrzeuginsassen betätigt werden kann.

Indem der Sicherheitsgurt unabhängig davon, ob eine Gefahrensituation ermittelt wurde oder nicht, in die zweite Stellung gestrafft bzw. gebracht werden kann, erschließt die erfindungsgemäße Sicherheitsanordnung neue Einsatzgebiete für den reversiblen Gurtstraffer, die über den normalen Einsatz im Rahmen einer Gefahrensituation hinausgehen. Sollte der Fahrer beispielsweise eine sportliche Fahrweise bevorzugen, so kann auch der Sicherheitsgurt entsprechend angepasst werden, d.h. dieser könnte durch entsprechende Wahl des Fahrers in die zweite, gestraffte Stellung gebracht werden, so dass der Fahrer während der sportlichen Fahrt fester an den Fahrzeugsitz gebunden ist. Auch beim Transport querschnittsgelähmter oder in sonstiger Weise körperbehinderter Personen ist die erfindungsgemäße Sicherheitsanordnung von Vorteil. Da sich eine gelähmte oder körperbehinderte Person bereits bei geringen Querbeschleunigungen nur schwer aufrecht halten kann, wird durch das Straffen des Sicherheitsgurtes unabhängig von einer Gefahrensituation sichergestellt, dass diese Personen nicht nach vorne oder zur Seite kippen, sondern vielmehr in aufrechter Sitzposition gehalten werden.

In einer bevorzugten Ausführungsform der erfindungsgemäßen Sicherheitsanordnung kann der Sicherheitsgurt in seiner zweiten Stellung arretiert werden, wobei der Gurtstraffer bei Arretierung des Sicherheitsgurtes wieder deaktiviert werden kann. Vorzugsweise sollten diese beiden Schritte im Anschluss an das Straffen des Sicherheitsgurtes in die zweite Stellung automatisch erfolgen. Durch diese bevorzugte Ausführungsform wird ein besonders energiesparender Betrieb des Gurtstraffers erreicht. Sollte der Gurtstraffer beispielsweise einen elektromotorischen Antrieb haben, so könnte dieser nach dem Arretieren des Sicherheitsgurtes in der zweiten Stellung ausgeschaltet werden. Auf diese Weise wird kein Strom mehr verbraucht. Zur Arretierung könnte beispielsweise ein einfacher Arretiermechanismus oder auch die in herkömmlichen Gurtautomaten ohnehin vorhandene Verriegelung verwendet werden.

In einer vorteilhaften Ausführungsform der erfindungsgemäßen Sicherheitsanordnung ist ein Betätigungselement zum Aktivieren des Gurtstraffers, Arretieren des Sicherheitsgurtes in der zweiten Stellung und Deaktivieren des Gurtstraffers vorgesehen. Indem nur ein Betätigungselement zur Durchführung der vorgenannten Schritte vorgesehen ist, ist die Handhabung der erfindungsgemäßen Sicherheitsanordnung stark vereinfacht. So könnte beispielsweise bereits ein Knopfdruck ausreichen, um alle vorgenannten Schritte auszuführen.

In einer weiteren vorteilhaften Ausführungsform der erfindungsgemäßen Sicherheitsanordnung kann mit Hilfe des Betätigungselementes mindestens eine weitere Kraftfahrzeugkomponente eingestellt, d.h. angesteuert oder geregelt, werden. Ein solches Betätigungselement ist insbesondere dann von Vorteil, wenn eine Kraftfahrzeugkomponente eingestellt werden soll, bei deren Einstellung eine gleichzeitige Straffung des Sicherheitsgurtes wünschenswert ist. Ein solches Betätigungselement kann beispielsweise ein Mehrfunktionsschalter sein.

In einer bevorzugten Ausführungsform der erfindungsgemäßen Sicherheitsanordnung ist die weitere Kraftfahrzeugkomponente eine das Fahrverhalten des Kraftfahrzeuges beeinflussende Komponente. Bei einer solchen Komponente könnte es sich beispielsweise um eine Dämpfungseinrichtung des Fahrwerkes handeln, die steuer- bzw. regelbar ist. Da beim Verstellen derartiger das Fahrverhalten beeinflussender Komponenten auch häufig eine Straffung des Sicherheitsgurtes gewünscht ist, bietet diese Ausführungsform eine besonders schnelle und einfache Bedienbarkeit.

In einer weiteren vorteilhaften Ausführungsform der erfindungsgemäßen Sicherheitsanordnung ist die mindestens eine weitere Kraftfahrzeugkomponente, die mit Hilfe des Betätigungselementes eingestellt werden kann, die Lenkeinrichtung, die Pedalerie, die Fahrwerkfederungseinrichtung, die Fahrwerkdämpfungseinrichtung, das elektronische Stabilitätsprogramm (ESP), die Traktionskontrolleinrichtung (TC), die Kurvenbremskontrolleinrichtung (CBC) oder das Antiblockiersystem (ABS) des Kraftfahrzeuges.

In einer besonders bevorzugten Ausführungsform der erfindungsgemäßen Sicherheitsanordnung kann die weitere Kraftfahrzeugkomponente durch Erreichen einer ersten vorbestimmten Betätigungsdauer eingestellt werden, während das Aktivieren des Gurtstraffers, das Arretieren des Sicherheitsgurtes in der zweiten Stellung und das Deaktivieren des Gurtstraffers durch Erreichen einer zweiten vorbestimmten Betätigungsdauer durchgeführt wird. Die zweite vorbestimmte Betätigungsdauer ist dabei länger als die erste vorbestimmte Betätigungsdauer. Die unterschiedlichen Funktionen des Betätigungselementes werden folglich durch die Dauer der Betätigung des Betätigungselementes bestimmt. Unter dem Erreichen einer vorbestimmten Betätigungsdauer kann sowohl das Erreichen der vorbestimmten Betätigungsdauer mit sofortiger Beendigung der Betätigung, als auch das Überschreiten der vorbestimmten Betätigungsdauer mit nachfolgender Weiterführung der Betätigung verstanden werden.

In einer weiteren vorteilhaften Ausführungsform der erfindungsgemäßen Sicherheitsanordnung kann die Arretierung des Sicherheitsgurtes in der zweiten Stellung manuell aufgehoben werden. Sollte der Fahrer beispielsweise von einer sportlichen zu einer verhaltenen Fahrweise übergehen wollen, so kann der Sicherheitsgurt entsprechend schnell wieder in seine Normalstellung gebracht werden. Die Aufhebung kann beispielsweise wieder durch Betätigung des Betätigungselementes erfolgen.

In einer besonders bevorzugten Ausführungsform der erfindungsgemäßen Sicherheitsanordnung ist eine Arretierungseinrichtung zum Arretieren des Sicherheitsgurtes in der zweiten Stellung vorgesehen, wobei die Arretierungseinrichtung derart ausgebildet ist, dass die Arretierung aufgehoben ist, wenn der Motor des Kraftfahrzeuges ausgeschaltet ist oder das Kraftfahrzeug steht. Auf diese Weise ist der Fahrer nach dem Abstellen des Motors oder dem Anhalten des Kraftfahrzeuges nicht gezwungen, die Arretierung wieder manuell aufzuheben, bevor er das Kraftfahrzeug verlassen kann. Der Bedienungskomfort ist somit erhöht.

In einer bevorzugten Ausführungsform der erfindungsgemäßen Sicherheitsanordnung kann die Straffkraft des Gurtstraffers eingestellt werden. Dies kann z.B. stetig oder stufenweise erfolgen, wobei zur Einstellung der Straffkraft ebenfalls das Betätigungselement verwendet werden könnte. Diese Ausführungsform ermöglicht eine besonders individuelle Anpassung der Sicherheitsanordnung.

Gemäß einer weiteren vorteilhaften Ausführungsform der erfindungsgemäßen Sicherheitsanordnung ist eine Ermittlungseinrichtung zur Ermittlung einer Gefahrensituation vorgesehen, wobei der Gurtstraffer derart mit der Ermittlungseinrichtung zusammenwirkt, dass der Gurtstraffer bei einer ermittelten Gefahrensituation aktiviert ist. Derartige Ermittlungseinrichtungen können beispielsweise durch Erfassen und Auswerten von Fahrzeugdaten und Umgebungsdaten die Wahrscheinlichkeit eines bevorstehenden Unfalls bzw. einen bereits stattfindenden Unfall ermitteln und entsprechende Steuersignale an den Gurtstraffer der Sicherheitsanordnung entsenden. Der Gurtstraffer kann somit auf Grund einer Gefahrensituation als auch unabhängig von einer Gefahrensituation aktiviert werden.

Das erfindungsgemäße Kraftfahrzeug weist mindestens zwei Sicherheitsanordnungen der zuvor beschriebenen Art auf, wobei die Sicherheitsanordnungen unabhängig voneinander betrieben werden können. So ist es beispielsweise denkbar, das jeder Sitz in dem Kraftfahrzeug mit einer solchen Sicherheitsanordnung versehen ist, wobei jede Sicherheitsanordnung mit Hilfe eines separaten Betätigungselementes betrieben werden kann. Durch die unabhängige Steuerung ist eine sitzplatzbezogene, individuelle Einstellung möglich. Es versteht sich jedoch, dass die Sicherheitsanordnungen des Beifahrers oder der Mitfahrer auf den Rücksitzen keine Möglichkeit bieten, die weiteren Kraftfahrzeugkomponenten einzustellen. Letzteres sollte nur durch die Sicherheitsanordnung des Fahrers durchführbar sein.

Nachstehend wird das erfindungsgemäße Verfahren zur Steuerung eines reversiblen Gurtstraffers in einem Kraftfahrzeug erläutert. Bezüglich der besonderen Vorteile des erfindungsgemäßen Verfahrens sei auf die oben stehende Beschreibung der erfindungsgemäßen Sicherheitsanordnung verwiesen, die analog gilt.

Das erfindungsgemäße Verfahren zur Steuerung eines reversiblen Gurtstraffers in einem Kraftfahrzeug umfasst den Verfahrensschritt des Aktivierens des Gurtstraffers, so dass ein Sicherheitsgurt von einer Normalstellung in eine zweite Stellung gebracht wird, in der der Sicherheitsgurt stärker als in der Normalstellung gestrafft ist, wobei das Aktivieren des Gurtstraffers unabhängig von einer Gefahrensituation erfolgt.

In einer vorteilhaften Ausführungsform des erfindungsgemäßen Verfahrens erfolgt das Aktivieren des Gurtstraffers, wenn ein Betätigungselement manuell betätigt wird.

Eine besonders bevorzugte Ausführungsform des erfindungsgemäßen Verfahrens umfasst den weiteren Verfahrensschritt des Arretierens des Sicherheitsgurtes in der zweiten Stellung und des Deaktivierens des Gurtstraffers, wenn das Betätigungselement betätigt wird.

In einer vorteilhaften Ausführungsform des erfindungsgemäßen Verfahrens wird durch Betätigung des Betätigungselementes mindestens eine weitere Kraftfahrzeugkomponente eingestellt, d.h. angesteuert oder geregelt.

In einer weiteren vorteilhaften Ausführungsform des erfindungsgemäßen Verfahrens ist die weitere Kraftfahrzeugkomponente eine das Fahrverhalten des Kraftfahrzeuges beeinflussende Komponente.

In einer bevorzugten Ausführungsform des erfindungsgemäßen Verfahrens ist die mindestens eine weitere Kraftfahrzeugkomponente, die durch Betätigen des Betätigungselementes eingestellt wird, die Lenkeinrichtung, die Pedalerie, die Fahrwerkfederungseinrichtung, die Fahrwerkdämpfungseinrichtung, das elektronische Stabilitätsprogramm (ESP), die Traktionskontrolleinrichtung (TC), die Kurvenbremskontrolleinrichtung (CBC) oder das Antiblockiersystem (ABS) des Kraftfahrzeuges.

In einer weiteren bevorzugten Ausführungsform des erfindungsgemäßen Verfahrens wird bei Erreichen einer ersten vorbestimmten Betätigungsdauer die weitere Kraftfahrzeugkomponente eingestellt, während das Aktivieren des Gurtstraffers, das Arretieren des Sicherheitsgurtes in der zweiten Stellung und das Deaktivieren des Gurtstraffers erst bei Erreichen einer zweiten vorbestimmten Betätigungsdauer erfolgt, wobei die zweite vorbestimmte Betätigungsdauer länger als die erste vorbestimmte Betätigungsdauer ist.

In einer weiteren vorteilhaften Ausführungsform des erfindungsgemäßen Verfahrens wird die Arretierung des Sicherheitsgurtes in der zweiten Stellung bei erneuter Betätigung des Betätigungselementes aufgehoben.

In einer besonders bevorzugten Ausführungsform des erfindungsgemäßen Verfahrens wird die Arretierung des Sicherheitsgurtes in der zweiten Stellung beim Ausschalten des Motors des Kraftfahrzeuges oder bei Stillstand des Kraftfahrzeuges aufgehoben.

Eine weitere vorteilhafte Ausführungsform des erfindungsgemäßen Verfahrens umfasst ferner den Verfahrensschritt des Ermittelns einer Gefahrensituation, wobei ein Aktivieren des Gurtstraffers auch dann erfolgt, wenn eine Gefahrensituation ermittelt wurde. Demzufolge schließt die Möglichkeit, den Gurtstraffer unabhängig von einer Gefahrensituation aktivieren zu können, die Möglichkeit nicht aus, dass der Gurtstraffer auch bei Ermittlung einer Gefahrensituation automatisch aktiviert wird.

Die Erfindung wird im Folgenden an Hand einer beispielhaften Ausführungsform unter Bezugnahme auf die zugehörige Zeichnung näher erläutert. Es zeigt:
- Fig.: eine schematische Darstellung der erfindungsgemäßen Sicherheitsanordnung.

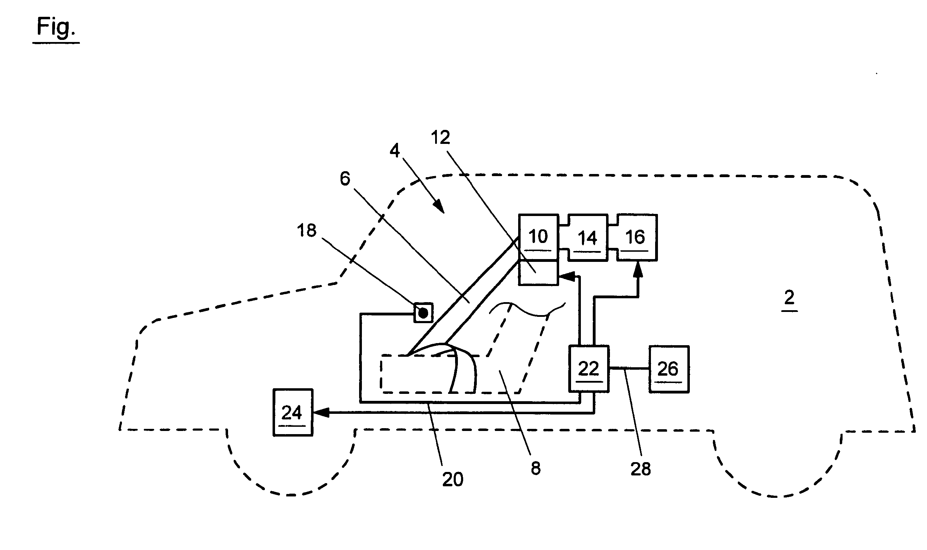

Die einzige Figur zeigt eine schematische Darstellung eines Kraftfahrzeuges 2 mit der erfindungsgemäßen Sicherheitsanordnung 4 zur Durchführung des erfindungsgemäßen Verfahrens.

Die Sicherheitsanordnung 4 weist einen Sicherheitsgurt 6 zum Zurückhalten eines nicht dargestellten Fahrers auf, der auf dem Fahrersitz 8 sitzt. Der Sicherheitsgurt 6 weist einen Aufwickelmechanismus 10 auf, der mit einer Arretiereinrichtung 12 zum Arretieren des Sicherheitsgurtes 6 versehen ist. Der Aufwickelmechanismus 10 steht mit einem reversiblen Gurtstraffer 14 in Wirkverbindung, wobei der Gurtstraffer 14 mit einem elektromotorischen Antrieb 16 zum Antreiben des Gurtstraffers 14 versehen ist.

Ferner ist ein Betätigungselement 18 in Form eines Knopfes vorgesehen, der im Griffbereich des auf dem Fahrersitz 8 sitzenden Fahrers angeordnet ist. Das Betätigungselement 18 ist über eine Leitung 20 mit einer Steuerungseinrichtung 22 zur Steuerung des elektromotorischen Antriebes 16, der Arretiereinrichtung 12 und einer weiteren Kraftfahrzeugkomponente 24, wie beispielsweise einer Fahrwerkdämpfungseinrichtung, verbunden. Des Weiteren ist eine Ermittlungseinrichtung 26 zur Ermittlung einer Gefahrensituation vorgesehen, die über eine Leitung 28 mit der Steuereinrichtung 22 verbunden ist.

Nachfolgend wird die Funktionsweise der Sicherheitsanordnung 4 Bezug nehmend auf unterschiedliche Fahrsituationen geschildert.

Es sei zunächst angenommen, dass die Ermittlungseinrichtung 26 keinerlei Gefahrensituation ermittelt hat und im weiteren Verlauf der Fahrt auch keine Gefahrensituation ermitteln wird. Der Fahrer möchte nunmehr zu einer sportlichen Fahrweise übergehen, wobei dies bei einer härteren Dämpfung des Fahrwerkes erfolgen soll. Zu diesem Zweck drückt der Fahrer auf das Betätigungselement 18. Hält der Fahrer den Knopf derart lange gedrückt, dass eine erste vorbestimmte Betätigungsdauer erreicht ist, so veranlasst die Steuerungseinrichtung 22 die Kraftfahrzeugkomponente 24 bzw. die Fahrwerkdämpfungseinrichtung dazu, in einen Betrieb mit härterer Dämpfung des Fahrwerkes umzuschalten. Hält der Fahrer den Knopf darüber hinaus gedrückt bis eine zweite vorbestimmte Betätigungsdauer erreicht ist, so wird der Fahrer mit Hilfe des Sicherheitsgurtes 6 stärker an den Fahrersitz 8 gezogen. Dies geschieht wie nachstehend erläutert.

Zunächst wird der elektromotorische Antrieb 16 von der Steuerungseinrichtung 22 veranlasst, den Gurtstraffer 14 anzutreiben. Der mit dem Aufwickelmechanismus 10 in Wirkverbindung stehende und angetriebene Gurtstraffer 14 bewirkt daraufhin eine Straffung des Sicherheitsgurtes 6, so dass der Sicherheitsgurt 6 von einer Normalstellung in eine zweite Stellung gebracht wird, in der der Sicherheitsgurt 6 stärker gestrafft ist als in der Normalstellung. Der Fahrer ist nun fest und sicher in dem Fahrersitz 8 positioniert. Nachdem der Sicherheitsgurt 6 in die zweite Stellung gebracht wurde, veranlasst die Steuerungseinrichtung 22 die Arretierungseinrichtung 12 dazu, den Sicherheitsgurt 6 in der zweiten Stellung zu arretieren. Nach dem Arretieren des Sicherheitsgurtes 6 ergeht ein erneutes Steuersignal von der Steuerungseinrichtung 22 an den elektromotorischen Antrieb 16, so dass dieser abgeschaltet wird. Der Gurtstraffer 14 ist somit wieder deaktiviert, dennoch verbleibt der Sicherheitsgurt 6 durch die Arretierung in seiner zweiten, gestrafften Stellung.

Möchte der Fahrer nun von der sportlichen zu einer normalen Fahrweise zurückkehren, so stehen ihm mehrere Möglichkeiten zur Verfügung, den Sicherheitsgurt 6 wieder in die Normalstellung zurück zu bringen.

So kann der Fahrer zunächst wieder das Betätigungselement 18 in Form des Knopfes drücken. Hält der Fahrer den Knopf derart lange gedrückt, dass die erste vorbestimmte Betätigungsdauer erreicht wird, so veranlasst die Steuerungseinrichtung 22 die Kraftfahrzeugkomponente 24 bzw. die Fahrwerkdämpfungseinrichtung dazu, wieder in den Normalbetrieb umzuschalten. Hält der Fahrer den Knopf darüber hinaus gedrückt bis die zweite vorbestimmte Betätigungsdauer erreicht ist, so veranlasst die Steuerungseinrichtung 22 die Arretierungseinrichtung 12 dazu, den Sicherheitsgurt 6 freizugeben, so dass dieser wieder in seine Normalstellung zurückkehren kann, in der der Fahrer mehr Bewegungsfreiheit hat.

An Stelle der manuellen Freigabe des Sicherheitsgurtes 6 kann der Fahrer jedoch auch auf die automatische Aufhebung der Arretierung warten. Hält das Kraftfahrzeug 20 an oder wird dessen Motor (nicht dargestellt) ausgeschaltet, so ergeht von der Steuerungseinrichtung 22 ein entsprechendes Signal an die Arretierungseinrichtung 12, die den Sicherheitsgurt 6 daraufhin freigibt.

Wie aus der vorstehenden Beschreibung ersichtlich, ermöglicht die erfindungsgemäße Sicherheitseinrichtung 4 eine Straffung des Sicherheitsgurtes 6, ohne dass eine Gefahrensituation durch die Ermittlungseinrichtung 26 ermittelt wurde, wodurch der Gurtstraffer 14 auch zu anderen Zwecken eingesetzt werden kann, die über den reinen Sicherheitsaspekt hinausgehen. Der Gurtstraffer 14 leistet insbesondere einen Beitrag zur Steigerung des Komforts. Dennoch ist die dargestellte Ausführungsform auch für den Normalbetrieb der Sicherheitsanordnung 4 in einer Gefahrensituation geeignet. Ermittelt die Ermittlungseinrichtung 26 eine Gefahrensituation, so ergeht von der Steuerungseinrichtung 22 ein entsprechendes Steuersignal an den elektromotorischen Antrieb 16, der den Gurtstraffer 14 antreibt, welcher wiederum den Sicherheitsgurt 6 strafft. Der Gurtstraffer 14 kann demzufolge auch ohne Zutun des Fahrers aktiviert werden.

### Bezugszeichenliste

- 2: Kraftfahrzeug
- 4: Sicherheitsanordnung
- 6: Sicherheitsgurt
- 8: Fahrersitz
- 10: Aufwickelmechanismus
- 12: Arretierungseinrichtung
- 14: Gurtstraffer
- 16: elektromotorischer Antrieb
- 18: Betätigungselement
- 20: Leitung
- 22: Steuerungseinrichtung
- 24: Kraftfahrzeugkomponente
- 26: Ermittlungseinrichtung
- 28: Leitung

## Patentansprüche

1. Sicherheitsanordnung für ein Kraftfahrzeug mit einem Sicherheitsgurt (6) und einem reversiblen Gurtstraffer (14), wobei der Sicherheitsgurt (6) mit Hilfe des reversiblen Gurtstraffers (14) von einer Normalstellung in eine zweite Stellung bringbar ist, in der der Sicherheitsgurt (6) stärker als in der Normalstellung gestrafft ist, **dadurch gekennzeichnet, dass** der Gurtstraffer (14) unabhängig von einer Gefahrensituation manuell aktiviert wird.

2. Sicherheitsanordnung nach Anspruch 1, **dadurch gekennzeichnet, dass** der Sicherheitsgurt (6) in der zweiten Stellung arretierbar ist, wobei der Gurtstraffer (14) bei Arretierung des Sicherheitsgurtes (6) wieder deaktivierbar ist.

3. Sicherheitsanordnung nach Anspruch 2, **dadurch gekennzeichnet, dass** ein Betätigungselement (18) zum Aktivieren des Gurtstraffers (14), Arretieren des Sicherheitsgurtes (6) in der zweiten Stellung und Deaktivieren des Gurtstraffers (14) vorgesehen ist.

4. Sicherheitsanordnung nach Anspruch 3, **dadurch gekennzeichnet, dass** mit Hilfe des Betätigungselementes (18) mindestens eine weitere Kraftfahrzeugkomponente (24) einstellbar ist.

5. Sicherheitsanordnung nach Anspruch 4, **dadurch gekennzeichnet, dass** die weitere Kraftfahrzeugkomponente (24) eine das Fahrverhalten des Kraftfahrzeuges (2) beeinflussende Komponente ist.

6. Sicherheitsanordnung nach einem der Ansprüche 4 oder 5, **dadurch gekennzeichnet, dass** die weitere Kraftfahrzeugkomponente (24) die Lenkeinrichtung, die Pedalerie, die Fahrwerkfederungseinrichtung, die Fahrwerkdämpfungseinrichtung, das elektronische Stabilitätsprogramm, die Traktionskontrolleinrichtung, die Kurvenbremskontrolleinrichtung oder das Antiblockiersystem des Kraftfahrzeuges ist.

7. Sicherheitsanordnung nach einem der Ansprüche 4 bis 6, **dadurch gekennzeichnet, dass** die weitere Kraftfahrzeugkomponente (24) durch Erreichen einer ersten vorbestimmten Betätigungsdauer einstellbar ist, während das Aktivieren des Gurtstraffers (14), das Arretieren des Sicherheitsgurtes (6) in der zweiten Stellung und das Deaktivieren des Gurtstraffers (14) durch Erreichen einer zweiten vorbestimmten Betätigungsdauer durchführbar ist, wobei die zweite vorbestimmte Betätigungsdauer länger als die erste vorbestimmte Betätigungsdauer ist.

8. Sicherheitsanordnung nach einem der Ansprüche 2 bis 7, **dadurch gekennzeichnet, dass** die Arretierung des Sicherheitsgurtes (6) in der zweiten Stellung manuell aufhebbar ist.

9. Sicherheitsanordnung nach einem der vorangehenden Ansprüche, **dadurch gekennzeichnet, dass** eine Arretierungseinrichtung (12) zum Arretieren des Sicherheitsgurtes (6) in der zweiten Stellung vorgesehen ist, wobei die Arretierungseinrichtung (12) derart ausgebildet ist, dass die Arretierung aufgehoben ist, wenn der Motor des Kraftfahrzeuges (2) ausgeschaltet ist oder das Kraftfahrzeug (2) steht.

10. Sicherheitsanordnung nach einem der vorangehenden Ansprüche, **dadurch gekennzeichnet, dass** die Straffkraft des Gurtstraffers einstellbar ist.

11. Sicherheitsanordnung nach einem der vorangehenden Ansprüche, **dadurch gekennzeichnet, dass** eine Ermittlungseinrichtung (26) zur Ermittlung einer Gefahrensituation vorgesehen ist, wobei der Gurtstraffer (14) derart mit der Ermittlungseinrichtung (26) zusammenwirkt, dass der Gurtstraffer (14) bei einer ermittelten Gefahrensituation aktiviert ist.

12. Kraftfahrzeug mit mindestens zwei Sicherheitsanordnungen nach einem der vorangehenden Ansprüche, wobei die Sicherheitsanordnungen unabhängig voneinander betreibbar sind.

13. Verfahren zur Steuerung eines reversiblen Gurtstraffers in einem Kraftfahrzeug mit dem Verfahrensschritt
Aktivieren des Gurtstraffers, so dass ein Sicherheitsgurt von einer Normalstellung in eine zweite Stellung gebracht wird, in der der Sicherheitsgurt stärker als in der Normalstellung gestrafft ist,
wobei das Aktivieren des Gurtstraffers unabhängig von einer Gefahrensituation erfolgt, wenn ein Betätigungselement manuell betätigt wird.

14. Verfahren nach Anspruch 13 mit dem weiteren Verfahrensschritt
Arretieren des Sicherheitsgurtes in der zweiten Stellung und Deaktivieren des Gurtstraffers, wenn das Betätigungselement betätigt wird.

15. Verfahren nach einem der Ansprüche 13 oder 14, **dadurch gekennzeichnet, dass** durch Betätigung des Betätigungselementes mindestens eine weitere Kraftfahrzeugkomponente eingestellt wird.

16. Verfahren nach Anspruch 15, **dadurch gekennzeichnet, dass** die weitere Kraftfahrzeugkomponente eine das Fahrverhalten des Kraftfahrzeuges beeinflussende Komponente ist.

17. Verfahren nach einem der Ansprüche 15 oder 16, **dadurch gekennzeichnet, dass** die weitere Kraftfahrzeugkomponente (24) die Lenkeinrichtung, die Pedalerie, die Fahrwerkfederungseinrichtung, die Fahrwerkdämpfungseinrichtung, das elektronische Stabilitätsprogramm, die Traktionskontrolleinrichtung, die Kurvenbremskontrolleinrichtung oder das Antiblockiersystem des Kraftfahrzeuges ist.

18. Verfahren nach einem der Ansprüche 15 bis 17, **dadurch gekennzeichnet, dass** bei Erreichen einer ersten vorbestimmten Betätigungsdauer die weitere Kraftfahrzeugkomponente eingestellt wird, während das Aktivieren des Gurtstraffers, das Arretieren des Sicherheitsgurtes in der zweiten Stellung und das Deaktivieren des Gurtstraffers erst bei Erreichen einer zweiten vorbestimmten Betätigungsdauer erfolgt, wobei die zweite vorbestimmte Betätigungsdauer länger als die erste vorbestimmte Betätigungsdauer ist.

19. Verfahren nach einem der Ansprüche 14 bis 18, **dadurch gekennzeichnet, dass** die Arretierung des Sicherheitsgurtes in der zweiten Stellung bei erneuter Betätigung des Betätigungselementes aufgehoben wird.

20. Verfahren nach einem der Ansprüche 14 bis 19, **dadurch gekennzeichnet, dass** die Arretierung des Sicherheitsgurtes in der zweiten Stellung beim Ausschalten des Motors des Kraftfahrzeuges oder bei Stillstand des Kraftfahrzeuges aufgehoben wird.

21. Verfahren nach einem der Ansprüche 12 bis 20 mit dem weiteren Verfahrensschritt
Ermitteln einer Gefahrensituation, wobei ein Aktivieren des Gurtstraffers ferner erfolgt, wenn eine Gefahrensituation ermittelt wurde.

## Claims

1. A security arrangement for a motor vehicle, comprising a safety belt (6) and a reversible belt pretensioner (14), with the safety belt (6) being capable of being brought from a normal position to a second position with the help of the reversible belt pretensioner (14) in which the safety belt (6) is tensioned more strongly than in the normal position, **characterized in that** the belt pretensioner (14) is activated manually independent from any hazardous situation.

2. A security arrangement according to claim 1, **characterized in that** the safety belt (6) can be locked in the second position, with the belt pretensioner (14) being capable of being deactivated again upon locking of the safety belt (6).

3. A security arrangement according to claim 2, **characterized in that** an actuating element (18) is provided for activating the belt pretensioner (14), locking the safety belt (6) in the second position and deactivating the belt pretensioner (14).

4. A security arrangement according to claim 3, **characterized in that** at least one further vehicle component (24) is adjustable with the help of the actuating element (18).

5. A security arrangement according to claim 4, **characterized in that** the further vehicle component (24) is a component which influences the driving behaviour of the motor vehicle (2).

6. A security arrangement according to one of the claims 4 or 5, **characterized in that** the further vehicle component (24) is the steering device, the pedal assembly, the chassis suspension device, the chassis damping device, the electronic stability program, the traction control device, corner brake control device or the anti-lock braking system of the motor vehicle.

7. A security arrangement according to one of the claims 4 to 6, **characterized in that** the further motor vehicle component (24) is adjustable by reaching a first predetermined actuating duration, whereas the activation of the belt pretensioner (14), the locking of the safety belt (6) in the second position and the deactivation of the belt pretensioner (14) can be performed by reaching a second predetermined actuating duration, with the second predetermined actuating duration being longer than the first predetermined actuating duration.

8. A security arrangement according to one of the claims 2 to 7, **characterized in that** the locking of the safety belt (6) in the second position can be removed manually.

9. A security arrangement according to one of the preceding claims, **characterized in that** a locking device (12) for locking the safety belt (6) in the second position is provided, with the locking device (12) being arranged in such a way that the locking is lifted when the motor of the motor vehicle (2) has been switched off or the motor vehicle (2) is standing.

10. A security arrangement according to one of the preceding claims, **characterized in that** the tensioning force of the belt pretensioner is adjustable.

11. A security arrangement according to one of the preceding claims, **characterized in that** a determining device (26) for determining a hazardous situation is provided, with the belt pretensioner (14) cooperating with the determining device (26) in such a way that the belt pretensioner (14) is activated when a hazardous situation has been determined.

12. A motor vehicle with at least two security arrangements according to one of the preceding claims, wherein the security arrangements can be operated independent from one another.

13. A method for controlling a reversible belt pretensioner in a motor vehicle, with the method step of activating the belt pretensioner, so that a safety belt is brought from a normal position to a second position in which the safety belt is tensioned more strongly than in the normal position, with the activation of the belt pretensioner occurring independent of a hazardous situation when an actuating element is actuated manually.

14. A method according to claim 13, with the following method step of locking the safety belt in the second position and deactivating the belt pretensioner when the actuating element is actuated.

15. A method according to one of the claims 13 or 14, **characterized in that** at least one further motor vehicle component is set by actuating the actuating element.

16. A method according to claim 15, **characterized in that** the further motor vehicle component is a component which influences the driving behaviour of the motor vehicle.

17. A method according to one of the claims 15 or 16, **characterized in that** the further motor vehicle component is the steering device, the pedal assembly, the chassis suspension device, the chassis damping device, the electronic stability program, the traction control device, corner brake control device or the anti-lock braking system of the motor vehicle.

18. A method according to one of the claims 15 to 17, **characterized in that** the further motor vehicle component is set upon reaching a first predetermined actuating duration, whereas the activation of the belt pretensioner, the locking of the safety belt in the second position and the deactivation of the belt pretensioner only occur upon reaching a second predetermined actuating duration, with the second predetermined actuating duration being longer than the first predetermined actuating duration.

19. A method according to one of the claims 14 to 18, **characterized in that** the locking of the safety belt in the second position is lifted upon renewed actuation of the actuating element.

20. A method according to one of the claims 14 to 19, **characterized in that** the locking of the safety belt in the second position is lifted upon switching off the motor of the motor vehicle or upon standstill of the motor vehicle.

21. A method according to one of the claims 12 to 20, comprising the further method step of determining a hazardous situation, with an activation of the belt pretensioner further occurring when a hazardous situation has been determined.

## Revendications

1. Dispositif de sécurité pour un véhicule à moteur avec une ceinture de sécurité (6) et un tendeur de ceinture réversible (14), dans lequel la ceinture de sécurité (6) peut être amenée à l'aide du tendeur de ceinture réversible (14) d'une position normale à une deuxième position dans laquelle la ceinture de sécurité (6) est plus fortement tendue que dans la position normale, **caractérisé en ce que** le tendeur de ceinture (14) est activé manuellement en dehors des situations dangereuses.

2. Dispositif de sécurité selon la revendication 1, **caractérisé en ce que** la ceinture de sécurité (6) peut être bloquée dans la deuxième position, le tendeur de ceinture (14) pouvant être désactivé lorsque la ceinture de sécurité (6) est bloquée.

3. Dispositif de sécurité selon la revendication 2, **caractérisé en ce qu'**un élément d'actionnement (18) est prévu pour activer le tendeur de ceinture (14), bloquer la ceinture de sécurité (6) dans la deuxième position et désactiver le tendeur de ceinture (14).

4. Dispositif de sécurité selon la revendication 3, **caractérisé en ce que** l'élément d'actionnement (18) permet de régler au moins un autre composant du véhicule à moteur (24).

5. Dispositif de sécurité selon la revendication 4, **caractérisé en ce que** l'autre composant du véhicule à moteur (24) est un composant influant sur le comportement de marche du véhicule à moteur (2).

6. Dispositif de sécurité selon l'une des revendications 4 ou 5, **caractérisé en ce que** l'autre composant du véhicule à moteur (24) est le système de direction, le pédalier, le système de suspension du châssis, le système d'amortissement du châssis, le programme électronique de stabilisation, le dispositif de contrôle de la traction, le dispositif de contrôle de la courbe de freinage ou le système antiblocage du véhicule à moteur.

7. Dispositif de sécurité selon l'une des revendications 4 à 6, **caractérisé en ce que** l'autre composant du véhicule à moteur (24) peut être réglé quand une première durée d'actionnement prédéterminée est atteinte, tandis que l'activation du tendeur de ceinture (14), le blocage de la ceinture de sécurité (6) dans la deuxième position et la désactivation du tendeur de ceinture (14) peuvent être réalisés quand une deuxième durée d'actionnement prédéterminée est atteinte, la deuxième durée d'actionnement prédéterminée étant plus longue que la première durée d'actionnement prédéterminée.

8. Dispositif de sécurité selon l'une des revendications 2 à 7, **caractérisé en ce que** le blocage de la ceinture de sécurité (6) dans la deuxième position peut être levé manuellement.

9. Dispositif de sécurité selon l'une des revendications précédentes, **caractérisé en ce qu'**il est prévu un dispositif de blocage (12) pour le blocage de la ceinture de sécurité (6) dans la deuxième position, lequel dispositif de blocage (12) est conformé de telle manière que le blocage est levé quand le moteur du véhicule à moteur (2) est arrêté ou quand le véhicule à moteur (2) est immobilisé.

10. Dispositif de sécurité selon l'une des revendications précédentes, **caractérisé en ce que** la force de tension du tendeur de ceinture est réglable.

11. Dispositif de sécurité selon l'une des revendications précédentes, **caractérisé en ce qu'**il est prévu un dispositif de détermination (26) pour déterminer une situation dangereuse, le tendeur de ceinture (14) coopérant avec le dispositif de détermination (26) de telle manière que le tendeur de ceinture (14) est activé quand une situation dangereuse est déterminée.

12. Véhicule à moteur équipé d'au moins deux dispositifs de sécurité selon l'une des revendications précédentes, dans lequel les dispositifs de sécurité peuvent être utilisés indépendamment l'un de l'autre.

13. Procédé pour la commande d'un tendeur de ceinture réversible dans un véhicule à moteur, comprenant l'étape d'activation du tendeur de ceinture de telle manière qu'une ceinture de sécurité soit amenée d'une position normale à une deuxième position dans laquelle la ceinture de sécurité est plus fortement tendue que dans la position normale, le tendeur de ceinture étant activé en dehors des situations dangereuses quand un élément d'actionnement est actionné manuellement.

14. Procédé selon la revendication 13 comprenant en outre l'étape de blocage de la ceinture de sécurité dans la deuxième position et de désactivation du tendeur de ceinture quand l'élément d'actionnement est actionné.

15. Procédé selon l'une des revendications 13 ou 14, **caractérisé en ce que** l'actionnement de l'élément d'actionnement règle au moins un autre composant du véhicule à moteur.

16. Procédé selon la revendication 15, **caractérisé en ce que** l'autre composant du véhicule à moteur est un composant agissant sur le comportement de marche du véhicule à moteur.

17. Procédé selon l'une des revendications 15 ou 16, **caractérisé en ce que** l'autre composant du véhicule à moteur (24) est le système de direction, le pédalier, le système de suspension du châssis, le système d'amortissement du châssis, le programme électronique de stabilisation, le dispositif de contrôle de la traction, le dispositif de contrôle de la courbe de freinage ou le système antiblocage du véhicule à moteur.

18. Procédé selon l'une des revendications 15 à 17, **caractérisé en ce que** l'autre composant du véhicule à moteur est réglé lorsqu'une première durée d'actionnement prédéterminée est atteinte, tandis que l'activation du tendeur de ceinture, le blocage de la ceinture de sécurité dans la deuxième position et la désactivation du tendeur de ceinture n'ont lieu que quand une deuxième durée d'activation prédéterminée est atteinte, la deuxième durée d'activation prédéterminée étant plus longue que la première durée d'activation prédéterminée.

19. Procédé selon l'une des revendications 14 à 18, **caractérisé en ce que** le blocage de la ceinture de sécurité dans la deuxième position est levé quand l'élément d'actionnement est actionné à nouveau.

20. Procédé selon l'une des revendications 14 à 19, **caractérisé en ce que** le blocage de la ceinture de sécurité dans la deuxième position est levé quand le moteur du véhicule à moteur est arrêté ou quand le véhicule à moteur s'immobilise.

21. Procédé selon l'une des revendications 12 à 20, comprenant en outre l'étape de détermination d'une situation dangereuse, le tendeur de ceinture étant en outre activé quand une situation dangereuse a été déterminée.
